# DEMANDE DE BREVET EUROPEEN

(11) **EP 0 774 470 A1**
(43) Date de publication de la demande: **21.05.1997**
(21) Numéro de dépôt: 96117325.9
(22) Date de dépôt: 29.10.1996
(51) Int. Cl.: C08F 10/00, C08F 4/602

(54) **Procédé de polymérisation des oléfines en présence d'un dérivé organique de l'aluminium**

(30) Priorité: 14.11.1995 FR 9513467
(71) Demandeur: ELF ATOCHEM S.A., 92800 Puteaux (FR)
(72) Inventeur: Senninger, Thierry, 57700 Hayange (FR); Malinge, Jean, 64300 Loubieng (FR); Ballivet-Tkatchenko, Danielle, 69300 Caluire (FR)

(57) **Abrégé**

Le procédé de la présente invention fait intervenir une première étape a) de réaction entre un alcool tertiaire de formule ROH et un trialkylaluminium de formule R¹R²R³Al dans laquelle R¹, R² et R³ représentent des radicaux alkyles contenant de préférence de 1 à 5 atomes de carbone, et une seconde étape b) de polymérisation ou de copolymérisation d'au moins une oléfine en présence d'un dérivé d'un métal de transition et du produit obtenu à l'issue de l'étape a).

## Description

L'invention concerne un procédé de polymérisation ou de copolymérisation d'au moins une oléfine en présence d'un dérivé d'un métal de transition et d'un dérivé organique de l'aluminium.

Les procédés de polymérisation des oléfines qui font intervenir un dérivé d'un métal de transition comme catalyseur font également généralement intervenir un cocatalyseur capable d'activer le dérivé du métal de transition. Ce cocatalyseur peut être un dérivé organique de l'aluminium tel qu'un alkylaluminium ou certains aluminoxanes de structure particulière difficiles à fabriquer et instables.

La fabrication d'un aluminoxane fait habituellement intervenir une réaction entre de l'eau et un alkylaluminium, ladite réaction étant particulièrmeent difficile à contrôler car pouvant mener à des produits solides et insolubles dans les solvants hydrocarbonés tels que le toluène. De plus, cette réaction est généralement fortement exothermique ce qui nécessite l'usage de faibles températures et de faibles vitesses de mise en contact entre les réactifs.

Le brevet EP0307877 propose comme cocatalyseur un composé organométallique obtenu par réaction entre 0 et 60°C de composés comme le glucose, avec un trialkylaluminium contenant au plus cinq atomes de carbone dans les chaînes alkyle. Les polymérisations faisant intervenir ce cocatalyseur présentent cependant de faibles productivités.

La demande de brevet WO 93/07188 enseigne qu'il est possible d'utiliser comme cocatalyseur d'un dérivé du titane, un alkoxyalkylaluminium, pour un procédé de polymérisation en solution, du moment que ledit procédé est au moins en partie conduit à une température au moins égale à 180°C.

L'article publié dans Aust. J. Chem. 1974, 27, 1639-53 (Auteurs : D. W. Harney, A. Meisters et T. Mole) enseigne qu'il est possible de faire réagir un alcool tertiaire et un alkylaluminium.

Le procédé de polymérisation ou de copolymérisation d'au moins une oléfine de la présente invention fait intervenir :
- une première étape a) de réaction entre un alcool tertiaire de formule ROH et un trialkylaluminium de formule R¹R²R³Al dans laquelle R¹, R² et R³ représentent des radicaux alkyles contenant de préférence de 1 à 5 atomes de carbone,
- une seconde étape b) de polymérisation ou de copolymérisation d'au moins une oléfine en présence d'un dérivé d'un métal de transition et du produit obtenu à l'issue de l'étape a).

Le procédé selon l'invention est simple et présente une forte productivité sans qu'il ne soit nécessaire de mener la polymérisation ou copolymérisation à plus de 180°C.

L'étape a) est faiblement exothermique, de sorte que les réactifs peuvent être mis en présence à la température ambiante et à relativement forte vitesse.

L'étape a) fait intervenir un mélange entre l'alcool tertiaire et le trialkylaluminium. Ces deux espèces réagissent ensemble pour former au moins un alcoolate d'aluminium que l'on peut représenter par la formule 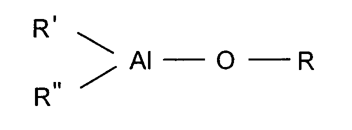 dans laquelle R' et R'' représentent des radicaux alkyle appartenant initialement au trialkylaluminium (c'est-à-dire R¹, R² ou R³), et R était initialement le radical lié au groupement hydroxyle de l'alcool tertiaire. La formation de cet alcoolate d'aluminium est plus ou moins éphémère suivant les conditions de réalisation du mélange entre l'alcool tertiaire et le trialkylaluminium, l'alcoolate d'aluminium étant susceptible d'évoluer plus ou moins rapidement suivant le milieu avec formation d'espèces de formule R'R et/ou R''R.

La présence d'eau lors de l'étape a) n'est pas nécessaire et elle est nécessaire pour aucune étape du procédé selon l'invention. Si l'on souhaite la présence d'eau lors de l'étape a), l'eau peut être présente de façon à ce que le rapport molaire de l'eau sur le trialkylaluminium utilisé pour l'étape a) soit inférieur à 0,1, voire inférieur à 0,05. Lorsqu'on parle d'eau, on entend indiféremment eau libre ou eau sous la forme d'un complexe comme dans un sel métallique hydraté.

La présence d'un sel métallique comme un sel de cuivre tel que le sulfate de cuivre hydraté lors de l'étape a) n'est pas nécessaire.

Le mélange peut par exemple être réalisé entre -80° C et 300°C en présence d'un solvant inerte, pendant 10 min à 50 heures.

On peut mener l'étape a) de deux manières différentes :
1) On peut réaliser le mélange de façon à ce que la formation de l'alcoolate soit éphémère, c'est-à-dire de façon à obtenir une forte quantité d'espèces de formule R'R et/ou R''R dans le milieu, par exemple plus de 50 % en mole de la quantité de R'R et/ou R''R auquel on doit s'attendre en cas de réaction totale compte tenu des quantités d'alcool et de trialkylaluminium introduites, ladite réaction totale menant à une structure aluminée dans laquelle au moins un radical parmi R' et R'' reste fixé à l'atome d'aluminium. Les quantités d'espèces R'R et/ou R''R (c'est-à-dire R¹R et/ou R²R et/ou R³R) obtenues en cas de réaction totale s'évaluent donc de la façon suivante :
   - soit le rapport molaire R¹R²R³Al/ROH≥1 et l'on s'attend en cas de réaction totale à un nombre total de moles d'espèces R¹R et/ou R²R et/ou R³R égal au nombre de moles de ROH introduit au départ,
   - soit le rapport molaire R¹R²R³Al/ROH<1 et l'on s'attend en cas de réaction totale à un nombre total de moles d'espèces R¹R et/ou R²R et/ou R³R égal au nombre de moles d'alkylaluminium introduit au départ.

   On peut être dans ce cas (formation éphémère de l'alcoolate) en réalisant le mélange en l'absence de composé présentant un caractère basique au sens de Lewis, et de préférence entre 40 et 300° C. On peut par exemple réaliser le mélange en présence d'un solvant hydrocarboné aliphatique, alicyclique ou, de préférence, aromatique, tel que le toluène ou le xylène. De préférence, le rapport molaire alcool sur trialkylaluminium va de 0,4 à 0,9. Le solvant peut par exemple être en quantité telle que la somme du nombre de mole d'alcool et du nombre de mole de trialkylaluminium aille de 1.10⁻² à 1 mole par litre. A l'issue de la réaction, il est possible d'introduire le mélange tel quel dans le milieu de polymérisation ou copolymérisation de l'étape b). On peut cependant également procéder à une évaporation des espèces volatiles tel que le solvant, les restes de réactifs n'ayant pas réagi, les espèces R'R et R''R, pour n'introduire que le résidu moins volatile riche en aluminium. Une telle séparation par évaporation peut par exemple être réalisée entre 0 et 50° C sous une pression résiduelle de gaz inerte comme l'argon ou l'azote de 0,01 à 1 mbars.
2) On peut réaliser le mélange de façon à favoriser la stabilité de l'alcoolate, ce qui se traduit par l'obtention d'une faible quantité d'espèces de formule R'R et/ou R''R dans le milieu, par exemple moins de 50 % en mole de la quantité de R'R et/ou R''R auquel on doit s'attendre en cas de réaction totale au sens ci-dessus donné. Ceci peut généralement être obtenu en réalisant le mélange en présence d'un composé non réactif vis-à-vis des différentes espèces du milieu mais présentant un caractère basique au sens de Lewis, ce qui lui donne un caractère complexant. Par exemple, le mélange peut être réalisé entre -80° C et 40° C en présence d'un solvant inerte présentant lui-même le caractère basique, ou en présence d'une solution comprenant un solvant inerte sans caractère basique et un composé à caractère basique. Le composé non-réactif à caractère basique peut être un éther tel que le tétrahydrofurane, le diéthyléther, le diisopropyléther, le dioxane, ou une amine tertiaire telle que la triméthylamine, ou la pyridine. De préférence, le rapport molaire alcool sur trialkylaluminium va de 0,1 à 1. L'éventuel solvant inerte et le composé basique peuvent par exemple être en quantité telle que la somme du nombre de mole d'alcool et du nombre de mole de trialkylaluminium aille de 5.10⁻³ à 1 mole par litre. De préférence, le rapport molaire du composé basique sur le trialkylaluminium est voisin de 1, par exemple compris entre 0,8 et 1,2. L'éventuel solvant inerte sans caractère basique peut être un hydrocarbure aliphatique, alicyclique, ou de préférence aromatique tel que le toluene ou le xylène. A l'issue de l'étape qui vient d'être décrite, le mélange est riche en alcoolate d'aluminium.

L'alcoolate d'aluminium présente, pour ce type de composé, une relativement bonne stabilité, même à l'air. Il est possible d'isoler l'alcoolate d'aluminium, par exemple afin de le stocker ou le transporter. Ceci peut être réalisé en évaporant les espèces volatiles telles que le solvant, les restes de réactifs n'ayant pas réagi, les éventuelles espèces R'R et R''R, l'alcoolate d'aluminium restant sous forme de phase condensée.

Que l'on ait isolé l'alcoolate d'aluminium ou non, il convient, pour poursuivre le procédé selon l'invention, de faire évoluer celui-ci de façon à favoriser la formation des espèces R'R et R''R. Ceci peut être réalisé par chauffage du milieu contenant l'alcoolate d'aluminium, après avoir enlevé le composé à caractère basique, par exemple, par évaporation. Le chauffage du milieu comprenant l'alcoolate d'aluminium peut être réalisé entre 60 et 300°C, pendant 10 min à 50 heures, et de préférence en présence d'un acide de Lewis et d'un solvant inerte. L'acide de Lewis préféré est le triméthylaluminium. Le solvant inerte est de préférence un solvant hydrocarboné aromatique tel que le toluène, le xylène, le mésitylène. Bien entendu, si la température choisie et la volatilité de certaines espèces du milieu l'exigent, il peut être utile de réaliser le chauffage sous pression. De préférence, le chauffage est réalisé dans les conditions suivantes :
- le rapport molaire de l'aluminium présent avant l'ajout de l'acide de Lewis sur l'acide de Lewis va de 1 à 10.
- la concentration en aluminium hormis l'éventuel aluminium provenant de l'acide de Lewis va de 1.10⁻² à 1 mole/litre.

La solution obtenue à l'issue de la période de chauffage, laquelle présente une bonne stabilité, peut être introduite telle quelle dans le milieu de polymérisation ou copolymérisation de l'étape b). Cependant, il est également possible de procéder à une évaporation des espèces volatiles présentes dans cette solution et d'introduire la phase condensée, riche en aluminium, dans le milieu de polymérisation ou copolymérisation de l'étape b). Par exemple, cette évaporation peut être réalisée entre 50 et 300 °C sous une pression résiduelle d'un gaz inerte comme l'azote ou l'argon de 0,01 à 1 mbar. La phase condensée présente une bonne stabilité. Elle reste soluble dans les solvants hydrocarbonés comme par exemple le toluène.

De préférence, le trialkylaluminium est le triméthylaluminium, ce qui signifie dans ce cas que les radicaux R' et R'' sont des radicaux méthyle.

L'alcool, de formule ROH est tertiaire, de sorte que le radical R peut être représenté par la formule 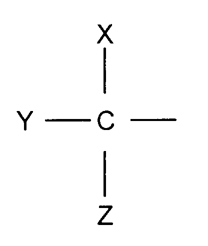 dans laquelle X, Y et Z représentent des radicaux comprenant des atomes de carbone et d'hydrogène. Les radicaux X, Y et Z peuvent être choisis parmi les radicaux alkyle comprenant de 1 à 20 atomes de carbone, lesdits radicaux alkyle étant éventuellement substitués, par exemple par au moins un radical alcoxy, mais sont de préférence choisis, pour au moins l'un d'eux et de préférence les trois, parmi des radicaux cycliques comme les radicaux cycloalkyles, cycloalcènyles, cycloalcadiényles ou aromatiques, lesdits radicaux cycliques étant éventuellement substitués par exemple par au moins un radical alkyle et/ou au moins un radical alcoxy, lesdits radicaux cycliques pouvant comprendre de 1 à 20 atomes de carbone.

Eventuellement, deux au moins des radicaux X, Y et Z peuvent être reliés entre eux par l'intermédiaire de radicaux bivalents tels qu'un pont oxygène.

A titre d'exemple, les radicaux X, Y et Z peuvent être choisis parmi les radicaux cyclopropyle, cyclopentyle, cyclohexyle, cyclopropenyle, phényle. A titre d'exemple, le radical R peut être choisi parmi les radicaux triphénylméthyle, tricyclopropylméthyle.

A titre d'exemple, l'alcool ROH peut être choisi parmi le triphénylméthanol (également appelé alcool trityle), le tricyclopropylméthanol, le cyclopropyldiphénylméthanol, le dicyclopropylphénylméthanol, le sesquixanthydrole.

Le dérivé d'un métal de transition peut être choisi parmi les éléments des groupes 3, 4, 5, 6, 7, 8, 9, 10, les lanthanides, les actinides, de la classification périodique des éléments, selon la nouvelle notation telle que définie dans le Handbook of Chemistry and Physics, soixante quinzième édition, 1994-1995. Ces métaux de transition sont de préférence choisis parmi le titane, le vanadium, le hafnium, le zirconium ou le chrome. Le métal de transition peut ne pas être le titane.

Le dérivé d'un métal de transition peut être intégré dans une composante catalytique solide. A titre d'exemple, la composante catalytique solide peut être de type Ziegler-Natta et se présenter sous la forme d'un complexe contenant au moins Mg, Ti et Cl, le titane se trouvant sous forme chlorée de Ti^{IV} et/ou de Ti^{III} et contenir éventuellement un donneur ou accepteur d'électrons.

Une composante catalytique de type Ziegler-Natta est habituellement le résultat de la combinaison d'au moins un composé du titane, un composé du magnésium, de chlore et éventuellement un composé d'aluminium et/ou un donneur ou accepteur d'électrons ainsi que de tout autre composé utilisable dans ce type de composante.

Le composé du titane est choisi habituellement parmi les composés chlorés du titane de formule Ti-(OR)ₓCl₄₋ₓ dans laquelle R représente un radical hydrocarboné aliphatique ou aromatique contenant de un à quatorze atomes de carbone, ou représente COR¹ avec R¹ représentant un radical hydrocarboné aliphatique ou aromatique contenant de un à quatorze atomes de carbone, et x représente un nombre entier allant de 0 à 3.

Le composé du magnésium est habituellement choisi parmi les composés de formule Mg(OR²)ₙCl₂₋ₙ, dans laquelle R² représente l'hydrogène ou un radical hydrocarboné linéaire ou cyclique et n représente un nombre entier allant de 0 à 2.

Le chlore présent dans la composante de type Ziegler-Natta peut provenir directement de l'halogénure de titane et/ou de l'halogénure de magnésium. Il peut également provenir d'un agent chlorant indépendant tel que l'acide chlorhydrique ou un halogénure organique comme le chlorure de butyle.

Le dérivé d'un métal de transition peut être choisi parmi les composés de formule ML_{X} dans lequel M représente le métal de transition, L représente un ligand coordiné au métal de transition, x est égal à la valence du métal de transition. Le métal de transition M a autant de ligands L, lesquels peuvent être identiques ou différents, que sa valence. Au moins un ligand L est un groupement au squelette de type cycloalcadiényle, c'est-à-dire soit le groupement cycloalcadiényle lui-même, soit un groupement cycloalcadiényle substitué, par exemple par un groupement hydrocarboné. Lorsque le composé de formule MLₓ contient au moins deux groupements au squelette de type cycloalcadiényle, au moins deux de ces groupements peuvent être liés entre eux par un radical bivalent.

Au moins un ligand L peut être choisi parmi les groupements de formule -O-, -S-, -NR³- ou -PR³- dont une des valences libres est liée à l'atome de métal de transition M et l'autre valence libre est liée à un radical bivalent, lui-même lié à un ligand L au squelette cycloalcadiényle, dans lesquelles R³ représente l'hydrogène ou un groupement choisi parmi les groupements silyl, alkyl ou aryl ces deux derniers groupements étant éventuellement halogénés.

Au moins un ligand L peut être choisi parmi les groupements de formule -OR⁴, -SR⁴, -NR⁴₂, ou -PR⁴₂ dont la valence libre est liée à un radical bivalent, lui-même lié à un ligand L au squelette cycloalcadiényle, dans lesquelles R⁴ représente l'hydrogène ou un groupement choisi parmi les groupements silyl, alkyl ou aryl, ces deux derniers groupements étant éventuellement halogénés.

Chaque radical bivalent peut être un radical alkylène comme le radical méthylène (-CH₂-), le radical éthylène (-CH₂CH₂-) ou triméthylène (-CH₂CH₂CH₂-), ce radical alkylène pouvant également être substitué, par exemple par au moins un groupement hydrocarboné, comme le radical isopropylidène. Ce radical bivalent peut être un groupement silylène (-SiH₂-) éventuellement substitué, par exemple par au moins un groupement hydrocarboné comme c'est le cas pour le radical diméthylsilylène ou diphénylsilylène.

De préférence, les ligands L au squelette cycloalcadiényle présentent un squelette cyclopentadiényle, c'est-à-dire sont des groupements cyclopentadiényles ou sont des groupements cyclopentadiényles substitués comme par exemple le groupement fluorényle ou le groupement indényle.

Les ligands L différents de ceux précédemment cités peuvent être des groupements hydrocarbonés comportant de 1 à 12 atomes de carbone, des groupements alcoxydes, des halogènes, ou l'hydrogène. Comme groupement hydrocarboné, on peut citer les groupements alkyle, cycloalkyle, aryle, aralkyle, ce qui inclut les groupements méthyle, éthyle, propyle, isopropyle, butyle, cyclopentyle, cyclohexyle, phényle, tolyle, benzyle. Comme groupement alcoxy, on peut citer les groupements méthoxy, éthoxy, butoxy, phénoxy. Comme halogène, on peut citer le fluor, le chlore, le brome, l'iode.

A titre d'exemple, le dérivé d'un métal de transition peut être choisi parmi les composés suivants : bis(cyclopentadiényl)dichlorozirconium, éthylènebis(4,5,6,7-tétrahydro-1-indényl)dichlorozirconium, éthylènebis(indényl)dichlorozirconium, isopropylydène(cyclopentadiényl, fluorényl)dichlorozirconium, diméthylsilyl(3-tert-butyl-cyclopentadiényl, fluorényl)dichlorozirconium, bis(cyclopentadiényl)diméthylzirconium, éthylènebis(4,5,6,7-tétrahydro-1-indényl)diméthylzirconium, éthylènebis(indényl)diméthylzirconium, isopropylydène(cyclopentadiényl, fluorényl)diméthylzirconium, diméthylsilyl(3-tert-butyl-cyclopentadiényl, fluorényl)diméthylzirconium, bis(cyclopentadiényl)diphénylzirconium bis(cyclopentadiényl)dibenzylzirconium diméthylsily(tétraméthylcyclopentadiényl, tert-butyl-amino)dichlorozirconium, ce dernier composé ayant pour formule (CH₃)₂Si((CH₃)₄C₅, (CH₃)₃CN)ZrCl₂, diméthylsilyl(tétraméthylcyclopentadiényl, tert-butyl-amino)diméthyltitane, ce composé ayant pour formule (CH₃)₂Si((CH₃)₄C₅, (CH₃)₃CN)Ti(CH₃)₂, bis(cyclopentadiényl)dichlorotitane, éthylènebis(4,5,6,7-tétrahydro-1-indényl)dichlorotitane, éthylènebis(indényl)dichlorotitane, isopropylydène(cyclopentadiényl, fluorényl)dichlorotitane, diméthylsilyl(3-tert-butyl-cyclopentadiényl, fluorényl)dichlorotitane, bis(cyclopentadiényl)diméthyltitane, éthylènebis(4,5,6,7-tétrahydro-1-indényl)diméthyltitane, éthylènebis(indényl)diméthyltitane, isopropylydène(cyclopentadiényl, fluorényl)diméthyltitane, diméthylsilyl(3-tert-butyl-cyclopentadiényl, fluorényl)diméthyltitane, diméthylsilyl(tétraméthylcyclopentadiényl, tert-butyl-amino)dichlorotitane, ce dernier composé ayant pour formule (CH₃)₂Si((CH₃)₄C₅, (CH₃)₃CN)TiCl₂.

Généralement, l'étape b) est menée de façon à ce que le rapport molaire de l'aluminium provenant de l'étape a) sur le métal de transition aille de 10 à 2.10⁵

L'étape b) mène à des polymères ou copolymères. Dans un but de simplification, dans le cadre de la présente demande, on considère que le terme polymère recouvre les termes copolymère et prépolymère, et l'on considère également que le terme polymérisation recouvre les termes prépolymérisation et copolymérisation. L'étape b) peut être menée en suspension, en solution, en phase gazeuse ou en masse. L'étape b) peut être menée à une pression inférieure à 4MPA, comme par exemple une pression inférieure à 3MPA et même inférieure à 1MPA.

Un procédé de polymérisation en masse consiste à réaliser une polymérisation dans l'une au moins des oléfines à polymériser maintenue à l'état liquide ou hypercritique.

Les procédés de polymérisation en solution ou en suspension consistent à réaliser une polymérisation en solution ou en suspension dans un milieu inerte et notamment dans un hydrocarbure aliphatique.

Pour un procédé de polymérisation en solution, on peut utiliser par exemple un hydrocarbure contenant de six à douze atomes de carbone ou un mélange de ces hydrocarbures. Pour un procédé de polymérisation en suspension, on peut utiliser par exemple le n-heptane, le n-hexane, l'isohexane, l'isopentane ou l'isobutane.

Les conditions opératoires pour ces procédés de polymérisation en masse, en solution, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension ou en solution, on peut opérer à des températures allant jusqu'à 250°C et sous des pressions allant de la pression atmosphérique à 250 bars. Dans le cas d'un procédé de polymérisation en milieu propylène liquide, les températures peuvent aller jusqu'à la température critique et les pressions peuvent être comprises entre la pression atmosphérique et la pression critique. Pour un procédé de polymérisation en masse conduisant à des polyéthylènes ou à des copolymères majoritaires en éthylène, on peut opérer à des températures comprises entre 130°C et 350°C et sous des pressions allant de 200 à 3500 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf-5)°C, et sous une pression telle que l'oléfine ou les oléfines soient essentiellement en phase vapeur.

Les procédés de polymérisation en solution, en suspension, en masse, ou en phase gazeuse peuvent faire intervenir un agent de transfert de chaînes, de manière à contrôler l'indice de fusion du polymère à produire. Comme agent de transfert de chaîne, on peut utiliser l'hydrogène, que l'on introduit en quantité pouvant aller jusqu'à 90 % et se situant de préférence entre 0,01 et 60 % en mole de l'ensemble oléfine et hydrogène amené au réacteur.

Un donneur externe d'électron peut être présent dans le milieu de polymérisation, en particulier lorsqu'une oléfine présentant au moins trois atomes de carbone doit être polymérisée ou copolymérisée. Ce donneur externe d'électron peut être un silane de formule SiR¹R²R³R⁴ dans laquelle l'un au moins des groupements lié au silicium est un groupement alcoxy de formule (-OR⁵) dans laquelle R⁵ représente un groupement hydrocarboné saturé linéaire contenant 1 à 4 atomes de carbone, et de préférence 1 ou 2 atomes de carbone, les autres groupements liés au silicium pouvant être des groupements hydrocarbonés contenant de préférence 1 à 8 atomes de carbone. Ce donneur externe d'électron peut être un diéther décrit dans la demande de brevet EP 0361493.

Les oléfines pouvant être utilisées pour la polymérisation, sont par exemple les oléfines comportant de deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène, ou leurs mélanges.

### Exemple 1

### a) Synthèse d'un dérivé organique de l'aluminium

On introduit dans un tube de Schlenk sous atmosphère d'argon 100 ml de toluène anhydre, puis 3,4.10⁻³ mode (soit 0,892 g) de triphénylmèthanol, puis 4,1.10^{- 3} mode de triméthylaluminium (TMA) sous la forme d'une solution à 1 mole/litre de TMA dans le toluène. On agite la solution jusqu'à interruption du dégagement gazeux, puis on chauffe le tube de Schlenk, toujours agité, à 90°C pendant 16 heures, et on laisse enfin le tube de Schlenk revenir à la température ambiante.

### b) Polymérisation en solution

Dans un réacteur en verre muni d'un système d'agitation et d'une régulation de température, on introduit sous agitation et sous atmosphère d'argon dans un réacteur purgé à l'argon :
- la solution préparée au a),
- une solution préparée comme suit : on dissout 52,1 mg de bis(cyclopentadiényl)dichlorozirconium (Cp₂ZrCl₂) dans 100 ml de toluène anhydre pour former une première solution. On dissout ensuite 16,8 µl de cette première solution dans 200 cm3 de toluène contenant 0,4.10⁻³ mode de TMA pour former une seconde solution, laquelle est intégralement injectée dans le réacteur.

Le réacteur est chauffé à 50°C, puis on injecte une pression partielle de 3 bars d'éthylène et l'on maintient cette pression d'éthylène pendant 1 heure et 30 minutes, à la suite de quoi, on dépressurise et refroidit le réacteur et l'on injecte 10 ml d'éthanol. Le polymère est filtré, lavé à l'éthanol puis séché à la température ambiante sous une pression résiduelle de 0,6 mbars, pendant 20 heures. On constate par pesée que la productivité a été de 1,7.10⁷ grammes de polyéthylène par mode de zirconium, par heure et par bar.

### Exemple 2

### a) Synthèse d'un dérivé organique de l'aluminium

### i) préparation d'un alcoolate d'aluminium

A une solution de 0,038 mole de triphénylméthanol dans 20ml de diéthyléther, on ajoute lentement à température ambiante et sous argon 0,057 mode de triméthylaluminium. Après arrêt du dégagement gazeux, on laisse le mélange sous agitation à température ambiante pendant 1 heure et 30 minutes. On élimine le solvant sous vide et sous agitation à la température ambiante et l'on récupère un solide blanc que l'on sèche à la température ambiante, sous une pression résiduelle de 0,6 mbar pendant 20 heures. Le solide est recristallisé dans un mélange de 120 ml de toluène et 60 ml d'heptane à 70°C, ce qui aboutit à des cristaux que l'on sèche dans les mêmes conditions que le solide blanc. On a ainsi obtenu du diméthyltriphénylméthoxyaluminium (Ph₃COAl(CH₃)₂).

### ii) décomposition de l'alcoolate d'aluminium

On mélange sous argon 100 cm³ de mésitylène anhydre et 2,5.10⁻³ mole de diméthyltriphénylméthoxyaluminium (soit 0,8154 g) dans un tube de Schlenk. On ajoute ensuite 6.10⁻⁴ mole de triméthylaluminium (TMA) sous la forme d'une solution à 1 mole/litre dans le toluène, et l'on porte le mélange à 140°C sous agitation pendant 18 heures et on le laisse ensuite revenir à la température ambiante.

### b) Polymérisation en solution

Dans un réacteur en verre muni d'un système d'agitation et d'une régulation de température, on introduit sous agitation et sous atmosphère d'argon dans un réacteur purgé à l'argon :
- la solution préparée au a),
- une solution préparée comme suit : on dissout 25,6 mg de bis(cyclopentadiényl)dichlorozirconium (Cp₂ZrCl₂) dans 100 ml de toluène anhydre pour former une première solution. On dissout ensuite 342 µl de cette première solution dans 200 cm³ de toluène contenant 1,1.10⁻³ mole de TMA pour former une seconde solution, laquelle est intégralement injectée dans le réacteur.

Le réacteur est chauffé à 50°C, puis on injecte une pression partielle de 3 bars d'éthylène et l'on maintient cette pression d'éthylène pendant 1 heure et 30 minutes, à la suite de quoi, on dépressurise et refroidit le réacteur et l'on injecte 20 ml d'éthanol. Le polymère est filtré, lavé à l'éthanol puis séché à la température ambiante sous une pression résiduelle de 0,6 mbars, pendant 20 heures. On constate par pesée que la productivité a été de 1.10⁷ grammes de polyéthylène par mole de zirconium, par heure et par bar.

## Revendications

1. Procédé de polymérisation ou copolymérisation d'au moins une oléfine faisant intervenir
- une étape a) comprenant une réaction entre un alcool tertiaire et un trialkylaluminium, en l'absence d'eau ou en présence d'une quantité d'eau telle que le rapport molaire de l'eau sur le trialkylaluminium soit inférieur à 0,1, puis
- une étape b) comprenant une polymérisation ou copolymérisation d'au moins une oléfine en présence d'un dérivé d'un métal de transition et du produit obtenu à l'issue de l'étape a).

2. Procédé selon la revendication 1 caractérisé en ce que le rapport molaire de l'eau sur le trialkylaluminium soit inférieur à 0,05.

3. Procédé selon la revendication 2 caractérisé en ce que l'eau est absente.

4. Procédé selon l'une des revendications 1 à 3 caractérisé en ce que la réaction de l'étape a) est menée en l'absence de composé présentant un caractère basique au sens de Lewis.

5. Procédé selon l'une des revendications 1 à 4 caractérisé en ce que la réaction de l'étape a) est menée entre 40 et 300° C.

6. Procédé selon l'une des revendications 1 à 5 caractérisé en ce que le rapport molaire alcool sur trialkylaluminium va de 0,4 à 0,9.

7. Procédé selon l'une des revendications 1 à 3 caractérisé en ce que la réaction de l'étape a) est réalisée en présence d'un composé présentant un caractère basique au sens de Lewis.

8. Procédé selon la revendication 7 caractérisé en ce que la réaction de l'étape a) est menée entre -80 et 40° C.

9. Procédé selon la revendication 7 ou 8 caractérisé en ce que le rapport molaire du composé basique sur le trialkylaluminium va de 0,8 à 1,2.

10. Procédé selon l'une des revendications 7 à 9 caractérisé en ce que le composé à caractère basique est un éther.

11. Procédé selon l'une des revendications 7 à 10 caractérisé en ce que le rapport molaire alcool sur trialkylaluminium va de 0,1 à 1.

12. Procédé selon l'une des revendications 7 à 11 caractérisé en ce que dans le cadre de l'étape a), la réaction est suivie d'un chauffage entre 60 et 300° C.

13. Procédé selon la revendication 12 caractérisé en ce que le chauffage est réalisé en présence d'un acide de Lewis.

14. Procédé selon la revendication 13 caractérisé en ce que le rapport molaire de l'aluminium présent avant l'ajout de l'acide de Lewis sur l'acide de Lewis va de 1 à 10.

15. Procédé selon la revendication 13 ou 14 caractérisé en ce que l'acide de Lewis est le triméthylaluminium.

16. Procédé selon l'une des revendications 1 à 15 caractérisé en ce que le trialkylaluminium est le triméthylaluminium.

17. Procédé selon l'une des revendications 1 à 16 caractérisé en ce que l'alcool comprend au moins un radical cyclique.

18. Procédé selon la revendication 17 caractérisé en ce que l'alcool est le triphénylméthanol.

19. Procédé selon l'une des revendications 1 à 18 caractérisé en ce que le métal de transition n'est pas le titane.

20. Procédé selon l'une des revendications 1 à 19 caractérisé en ce que l'étape b) est menée à une pression inférieure à 3MPA.

21. Procédé selon l'une des revendications 1 à 20 caractérisé en ce que le métal de transition est le zirconium.

22. Procédé selon l'une des revendications 1 à 21 caractérisé en ce que le rapport molaire de l'aluminium provenant de l'étape a) sur le métal de transition va de 10 à 2.10⁵.
